# EUROPÄISCHE PATENTSCHRIFT

(11) **EP 1 487 587 B1**
(45) Veröffentlichungstag und Bekanntmachung des Hinweises auf die Patenterteilung: **08.08.2007**
(21) Anmeldenummer: 03714834.3
(22) Anmeldetag: 17.03.2003
(51) Int. Cl.: B04B 9/12

(54) **SEPARATOR MIT HYDROHERMETISCHER ABDICHTUNG DER SPINDEL**
SEPARATOR WITH A HYDROHERMETICALLY SEALED SPINDLE
SEPARATEUR PRESENTANT UN AXE A ETANCHEITE HYDROHERMETIQUE

(30) Priorität: 22.03.2002 DE 10212808
(43) Veröffentlichungstag der Anmeldung: 22.12.2004
(73) Patentinhaber: Westfalia Separator AG, 59302 Oelde (DE)
(72) Erfinder: MOSS, Reinhard, 59320 Ennigerloh (DE)
(74) Vertreter: Specht, Peter
(86) Internationale Anmeldenummer: PCT/EP2003/002752
(87) Internationale Veröffentlichungsnummer: WO 2003/080250

(56) Entgegenhaltungen:
- WO-A-98/57751
- WO-A-98/57752
- DE-B- 1 285 412
- DE-B- 1 286 785
- DE-C- 825 575
- US-A- 3 765 688

## Beschreibung

Die Erfindung betrifft einen Separator nach dem Oberbegriff des Anspruchs 1.

Der Behälter mit der Schleudertrommel bildet bei einem Separator nach dem Sprachgebrauch dieser Anmeldung den Haubenbereich der Zentrifuge. Die Schleudertrommel mit vertikaler Drehachse ist auf eine Spindel aufgesetzt, welche beispielsweise mit einem oberen und einem hierzu axial versetzten, unteren Lager an einem Maschinengestell gelagert ist. Der Bereich der Lager ist dem Getriebebereich des Separators zuzurechnen. Ein Problem stellt die Abdichtung zwischen dem Getriebebereich und dem Haubenbereich dar, da sich die Spindel durchgehend von der Schleudertrommel im Haubenbereich bis in den Getriebebereich erstreckt. Die erforderliche Abdichtung an der Spindel wird nach dem Stand der Technik z.B. durch Berührungsdichtungen realisiert.

Die DE 1 285 412 zeigt eine Ultrazentrifuge, deren Rotor an einer Vakuumkammer läuft. Zur Lagerung dienen zwei Gleitlager, welche die Radialkräfte der Konstruktion aufnehmen und zwischen denen sich eine Scheibe als Axiallager befindet. Das Schmieröl wird durch eine Leitung unter Druck zugeführt. Die Lagerung wird zusammenfassend durch das Gehäuse mit der Spindel, der Scheibe und der oberen Lagerstelle gebildet.

Nach der DE 1 286 785 wird bei einer Vakuumzentrifuge ein Stopfbuchsensystem mit Schmieröl aus einem Hochbehälter versorgt und über eine Kammer mittels Schwerkraft in Behälter und Leitung gefördert.

Die US 3 765 688 zeigt eine Fluiddichtung für eine Hochgeschwindigkeitswelle einer Zentrifuge.

Die DE 825 575 zeigt eine Spindellagerung mit zwei Wälzlagern, welche aus einem Sumpf mit einem selbstansaugenden System mit Schmieröl versorgt werden.

Bei der WO-A-98S77S2 und der WO-A-9857751 wird unterhalb des Lagers der Spindel ein Beaufschlagung mit Schmieröl vorgenommen. Eine Trennung zwischen Antriebssystem, insbesondere zwischen dem Lager- und dem Trommelraum ist bei dieser Konstruktion nicht gegeben.

Die Erfindung hat die Aufgabe, eine zuverlässige und nicht mit Verschleißproblemen behaftete Abdichtung zwischen dem Getriebebereich und dem Haubenbereich auf konstruktiv einfache Weise zu realisieren.

Die Erfindung löst diese Aufgabe durch den Gegenstand des Anspruchs 1.

Als Sperrmedium wird vorzugsweise das den Lagern zugeführte Öl - für eine externe Schmierung - genutzt, welches zunächst durch die Sperrkammer geleitet wird und dort eine abdichtende Ölschicht ausbildet, bevor es aus der Sperrkammer zur Schmierung zu den Lagern weitergeleitet wird. Ein zusätzliches Sperrmedium wie Wasser ist nicht erforderlich. Die sich bei Drehungen der Schleudertrommel in der Sperrkammer ausbildende Ölschicht sorgt mit konstruktiv einfachen Mitteln für eine zuverlässige Abdichtung ohne jegliche Verschleißprobleme. Ergänzend wird gleichzeitig auch eine Schmierung des Wälzlagers erreicht.

In der Sperrkammer ist eine Tauchscheibe angeordnet, welche in die Ölschicht eintaucht. Bevorzugt ist diese Tauchscheibe an ihren Axialwandungen mit Rippen versehen. Dies bietet sich insbesondere an, wenn sich die Tauchscheibe im Betrieb mit der Spindel mitdreht und die Außen- bzw. Stirnwandung und die beiden Axialwandungen der Sperrkammer als im Betrieb stillstehend ausgebildet sind. Diese Konstruktion lässt sich mit besonders geringem konstruktivem Aufwand realisieren.

Alternativ ist es auch denkbar, dass die Außenwandung und die beiden Axialwandungen der Sperrkammer als im Betrieb mit der Spindel mitrotierend und die Tauchscheibe stillstehend ausgebildet ist. In diesem Fall ist es zweckmäßig, wenn die Axialwandungen der Sperrkammer mit Rippen versehen sind. Dabei kann die Tauchscheibe an ein zylindrisches, die Spindel umgebendes, im Betrieb stillstehendes Maschinengestellteil angeformt und die Sperrkammer im Bereich ihrer unteren Axialwandung mit der Spindel verbunden sein. Auch diese Ausführungsform ist einfach realisierbar und bietet sämtliche weiteren vorstehend genannten Vorteile.

Die Sperrkammer weist eine Verbindung zu einer Passage auf, in der die Lager angeordnet sind, so dass durch die Passage in einfachster Weise ergänzend auch eine Schmierung der Lager (insbesondere Wälzlager) realisiert wird. Dabei sind in der Passage axial versetzt zueinander zwei der Lager - insbesondere ein Hals und ein Fußlager - angeordnet, so dass den beiden Lagern und der Sperrkammer auf einfachste Weise gemeinsam Öl über ein einziges System zugeleitet wird.

Weitere vorteilhafte Ausführungsformen der Erfindung sind den übrigen Unteransprüchen zu entnehmen.

Nachfolgend wird die Erfindung anhand eines Ausführungsbeispiels unter Bezug auf die Zeichnung näher beschrieben. Es zeigt:
- Fig. 1: eine Schnittansicht eines Separators in vereinfachter schematischer Darstellung;
- Fig. 2: einen Ausschnitt des Separators aus Fig. l;
- Fig. 3: einen Ausschnitt eines zweiten Separators in vereinfachter schematischer Darstellung; und
- Fig. 4: einen Ausschnitt eines dritten Separators in vereinfachter schematischer Darstellung.

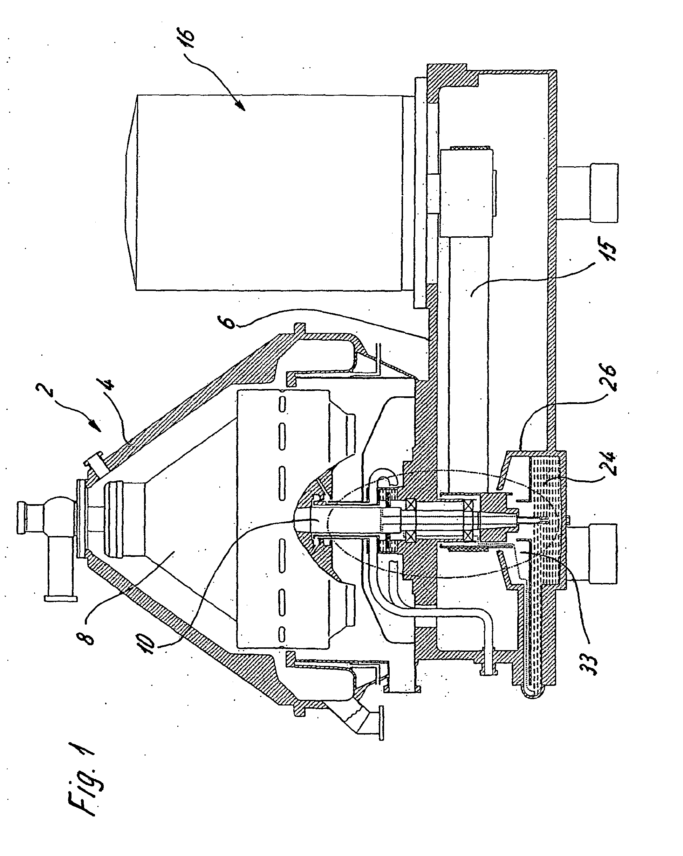

Fig. 1 zeigt einen Separator 2 mit einem Behälter 4, der auf einem Maschinengestell 6 angeordnet ist. Der Separator 2 weist eine in dem Behälter 4 angeordnete Schleudertrommel 8 mit senkrecht zum Boden ausgerichteter Drehachse auf Der Behälter 4 mit der Schleudertrommel 8 bildet den Haubenbereich der Zentrifuge aus.

Die Schleudertrommel ist auf eine Spindel 10 aufgesetzt, welche in zwei axial zueinander versetzten Lagern 12, 14 am Maschinengestell 6 gelagert und mit einem (Flach-)Antriebsriemen 15 antreibbar ist, welcher einerseits die Spindel 10 und andererseits ein Abtriebsteil einer Antriebseinheit 16 umschlingt. Der Bereich der beiden Lager 12, 14 gehört zum Getriebebereich des Separators. Die Spindel 10 greift in ihrem oberen Bereich mit einem sich keilförmig verjüngenden Abschnitt in die Schleudertrommel 8 ein.

Da sich die Spindel 10 vom Haubenbereich bis in den Getriebebereich erstreckt, ist eine konstruktiv einfache und zuverlässige Abdichtung zwischen diesen Bereichen notwendig. Diese wird hier durch eine hydrohermetische Abdichtung erreicht.

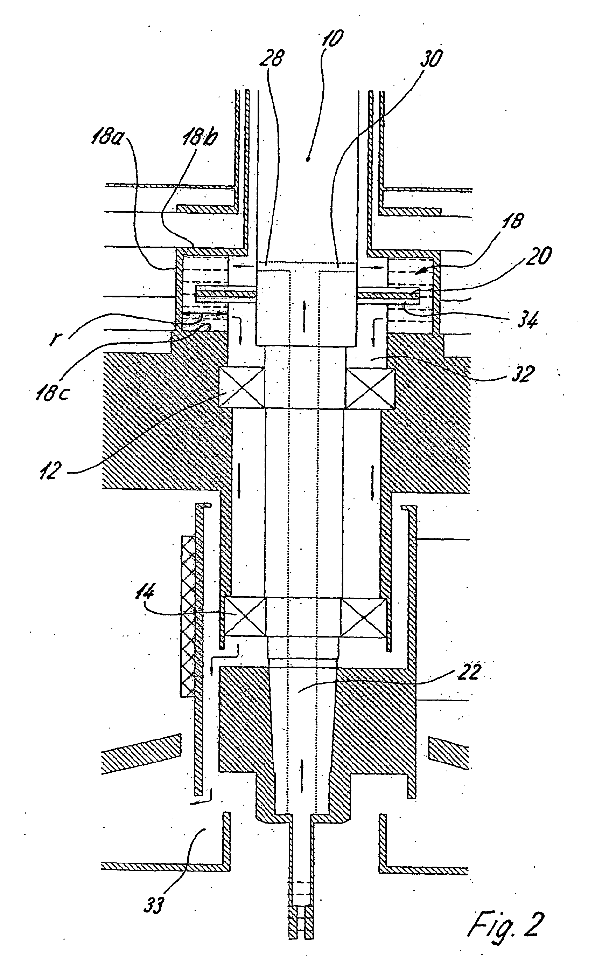

Oberhalb des oberen Lagers 12 und unterhalb der Schleudertrommel 8 ist die Spindel 10 zur Realisierung dieser Abdichtung von einer ringförmigen Sperrkammer 18 mit einer zylindrischer Außenwandung 18a, einer oberen scheibenartigen Axialwandung 18b und einer unteren scheibenartigen Axialwandung 18c umgeben. In der Sperrkammer 18 ist eine ringscheibenförmige Tauchscheibe 20 angeordnet, die am Außenumfang der Spindel 10 angebracht ist und deren äußerer Radius kleiner ist als der Radius an der Innenseite der Stirn- bzw. Außenwandung 18a am größten Umfang der Sperrkammer 18. Auf diese Weise kann die Tauchscheibe 20 in der Sperrkammer von Fluid - z.B. einem Schmierstoff - umströmt werden. An ihren beiden Axialwandungen ist die Tauchscheibe mit z.B. radial verlaufenden Rippen 34 versehen.
Da die Tauchscheibe 20 nach Fig. 1, 2 und 3 mit der Spindel 10 verbunden ist, dreht sie sich im Betrieb des Separators mit der Spindel 10 mit. Die Wandungen 18a,b und 18c sind dagegen mit dem Maschinengestell 6 verbunden oder daran angeformt, so dass sie im Betrieb der Zentrifuge stillstehen.

Die mit einer zentrischen Bohrung 22 versehene Spindel 10 taucht mit ihrem unteren, von der Schleudertrommel 8 abgewandten und sich - hier zweifach gestuft - verjüngenden Ende in einen Ölsumpf 24 in einem Behälter 26. Die Bohrung 22 erstreckt sich zentrisch axial durch die Spindel 10 bis zu radialen Verteilerkanälen 28, 30, welche radial in die Sperrkammer 18 im Bereich oberhalb der Tauchscheibe 20 münden.

An ihrem unteren Ende mündet die Sperrkammer 18 innen zur Spindel 10 hin in eine Passage - hier in Form eines Ringkanales 32 um die Spindel 10 - die sich von der Sperrkammer 18 bis zu einem Rücklaufbereich 33 in den Behälter 26 für den Ölsumpf 24 erstreckt und in der die beiden axial zueinander versetzten Lagern derart angeordnet sind, dass sie von dem Öl in der Passage geschmiert werden.

Die Funktion dieser Anordnung nach Fig. 1 ist wie folgt.

Bei Drehungen der Schleudertrommel 8 wird aus dem Ölsumpf 24 Öl durch die Bohrung 22 in die Verteilerkanäle 28, 30 und von dort in die Sperrkammer 18 gefördert. Dort wird es durch die Rotation der Spindel 10 und die Rippen 34 an der mit der Spindel 10 mitrotierenden Tauchscheibe 20 in den radial äußeren Bereich der Sperrkammer 18 geschleudert und bildet dort eine Ölschicht mit einem Radius r - von der Außenwandung 18a nach innen hin betrachtet - aus, in welche der äußere Rand der Tauscheibe 20 eintaucht.

Aus der Sperrkammer 18 fließt das überlaufende Öl in den Ringkanal 32 und sorgt dort für die Schmierung der Lager 12 und 14, bevor es in den Rücklaufbereich 33 des Behälters 26 und von dort in den Ölsumpf 24 zurückfließt.

Damit wird die für die Lager 12, 14 erforderliche Schmierung in vorteilhafter Weise auch für die hydrohermetische Abdichtung an der Spindel oberhalb des Lagers 12 genutzt.

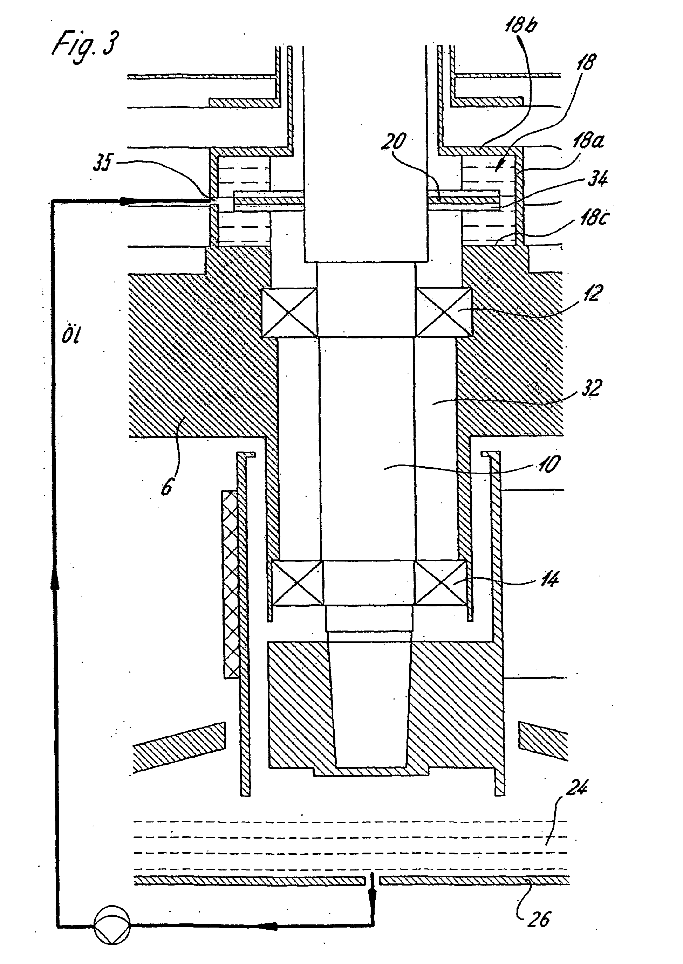

Eine erste alternative Ausführungsform zeigt Fig. 3. Hier wird das Öl radial von außen durch eine Bohrung 35 in der Außenwandung 18a der Sperrkammer 18 in diese geleitet, z.B. mittels einer Pumpeinrichtung. Ansonsten entsprechen Aufbau und Funktion dem Ausführungsbeispiel der Fig. 1.

Alternativ - hier nicht dargestellt - ist es auch denkbar, der Bohrung 35 das Öl mittels eines externen Ölaggregates zuzuführen und das ablaufende Öl zurück in einen Behälter des Ölaggregates zu leiten.

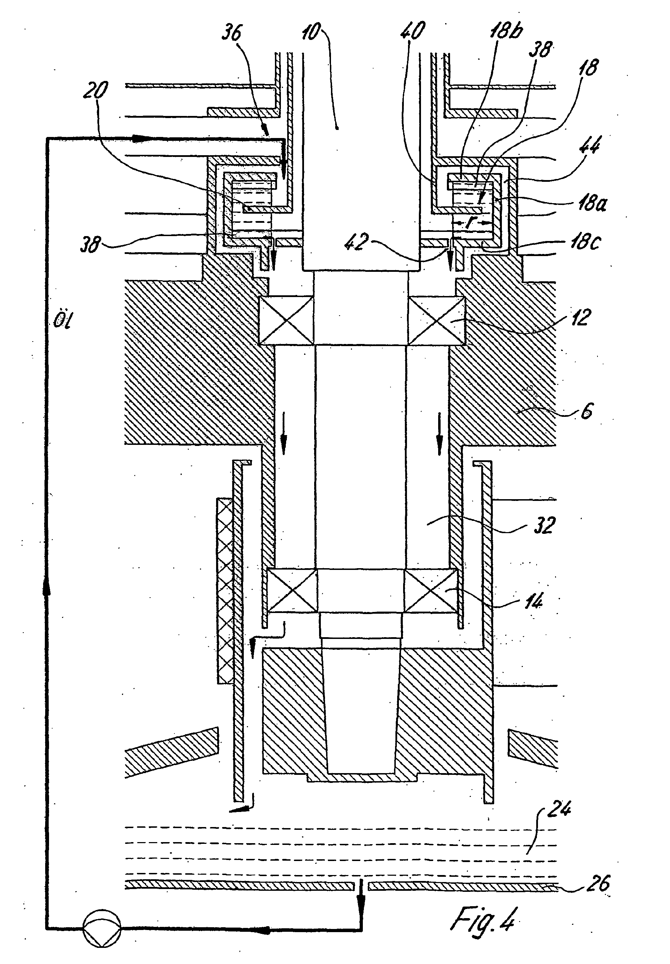

Eine zweite alternative Ausführungsform zeigt Fig. 4. Hier wird das Ö1 nicht durch die Spindel 10 sondern radial von außen in einen kurzen Ringkanal 36 oberhalb der Sperrkammer um der Spindel 10 geleitet, welcher unten in den radial inneren Bereich der Sperrkammer 18 mündet, welche im Bereich ihrer Axialwandungen 18b, c mit z.B. radial verlaufenden Rippen 38 versehen ist. Die Tauchscheibe 20 ist hier stillstehend ausgebildet und an ein zylindrisches, die Spindel umgebendes, aber im Betrieb stillstehendes Maschinengestellteil 40 angeformt. Die Sperrkammer 18 ist dagegen im Bereich ihrer unteren Axialwandung 18 c mit der Spindel 10 verbunden, so dass sich im Betrieb die beiden Axialwandungen 18b und c und die Außenwandung 18b mit der Spindel 10 mitdrehen. Passagen 42 in der unteren Axialwandung 18c der Sperrkammer 18 erlauben den Durchtritt von Öl in den Ringkanal 32. Am Außenumfang der Sperrkammer 18 ist diese von einem Ringraum 44 umgeben, durch den ebenfalls Öl in den Ringkanal 32 mit den Lagern 12 und 14 fließen kann.

Bei Drehungen der Schleudertrommel 8 wird aus dem Ölsumpf 24 Öl in die Sperrkammer 18 gefördert. Dort wird es durch die Rotation der Sperrkammerwandungen 18a-c und der Rippen 38 an den Axialwandungen in den radial äußeren Bereich der Sperrkammer 18 geschleudert und bildet dort eine wiederum eine ringartige Ölschicht mit einem Radius "r" aus, in welche der äußere Rand der Tauscheibe 20' eintaucht. Hierdurch wird wiederum eine hydrohermetische Abdichtung realisiert.

### Bezugszeichen

- Separator: 2
- Behälter: 4
- Maschinengestell: 6
- Schleudertrommel: 8
- Spindel: 10
- Lager: 12, 14
- Antriebsriemen: 15
- Antriebseinheit: 16
- Sperrkammer: 18
- Außenwandung: 18a
- Axialwandungen: 18b,c
- Tauchscheibe: 20
- Bohrung: 22
- Ölsumpf: 24
- Behälter: 26
- Verteilerkanäle: 28, 30
- Ringkanal: 32
- Rücklaufbereich: 33
- Rippen: 34
- Bohrung: 35
- Ringkanal: 36
- Rippen: 38
- Maschinengestellteil: 40
- Passagen: 42
- Ringraum: 44
- Radius: "r"

## Patentansprüche

1. Separator, der
a) eine in einem Behälter (4) angeordnete Schleudertrommel (2) aufweist, deren Drehachse vertikal ausgerichtet ist und
b) welche mittels einer zentrischen Spindel (10) antreibbar ist, die mit einem oberen Lager (12) und einem zu diesem axial versetzten unteren Lager (14) an einem Maschinengestell (6) um die Vertikale drehbar gelagert ist,
**dadurch gekennzeichnet, dass**
c) in dem axialen Bereich zwischen dem oberen Lager (12) und der Schleudertrommel (8) um die Spindel (10) zumindest abschnittsweise eine Sperrkammer (18) für eine hydrohermetische Abdichtung mittels einer Ölschicht ausgebildet ist,
d) in der Sperrkammer (18) eine Tauchscheibe (20) angeordnet ist,
e) die Sperrkammer (20) eine Verbindung zu einer Passage (32) aufweist, in der axial versetzt zueinander die zwei Lager (12, 14) derart angeordnet sind, dass das Öl aus der Sperrkammer (18) zur Schmierung zu den Lagern (12, 14) weitergeleitet wird.

2. Separator nach Anspruch 1, **dadurch gekennzeichnet, dass** die Schleudertrommel (8) von oben auf die Spindel (10) aufgesetzt ist.

3. Separator nach einem der Ansprüche 1 oder 2, dass die Sperrkammer (18) mit einem Ölsumpf (24) verbunden.

4. Separator nach einem der vorstehenden Ansprüche, **dadurch gekennzeichnet, dass** die Sperrkammer (18) ringförmig die Spindel (10) umgibt und eine Au-ßenwandung (18a) und eine obere und eine untere Axialwandung (18b, c) aufweist.

5. Separator nach einem der vorstehenden Ansprüche, **dadurch gekennzeichnet, dass** die Tauchscheibe (20) als im Betrieb mit der Spindel (10) mitrotierendes Element ausgebildet ist.

6. Separator nach einem der vorstehenden Ansprüche, **dadurch gekennzeichnet, dass** die Außenwandung (18a) und die beiden Axialwandungen (18b, c) der Sperrkammer (18) als im Betrieb stillstehend ausgebildet sind.

7. Separator nach Anspruch 5 und 6, **dadurch gekennzeichnet, dass** die Tauchscheibe (20) an ihren Axialwandungen Rippen (34) aufweist.

8. Separator nach einem der Ansprüche 1-4, **dadurch gekennzeichnet, dass** die Tauchscheibe (20) als im Betrieb stillstehendes Element ausgebildet ist.

9. Separator nach Ansprüche 8, **dadurch gekennzeichnet, dass** die Außenwandung (18a) und die beiden Axialwandungen (18b, c) der Sperrkammer (18) als im Betrieb mit der Spindel (10) mitrotierend ausgebildet sind.

10. Separator nach Ansprüche 9, **dadurch gekennzeichnet, dass** die Axialwandungen (18b, c) der Sperrkammer (18) mit Rippen (38) versehen sind.

11. Separator nach Anspruch 9 oder 10, **dadurch gekennzeichnet, dass** die Tauchscheibe (20) an ein zylindrisches, die Spindel (10) umgebendes, im Betrieb stillstehendes Maschinengestellteil (40) angeformt ist und dass die Sperrkammer (18) im Bereich ihrer unteren Axialwandung (18 c) mit der Spindel (10) verbunden ist.

12. Separator nach Anspruch 11, **dadurch gekennzeichnet, dass** die Sperrkammer am Außenumfang von einem Ringraum (44) umgeben ist, der mit dem Ringkanal (32) verbunden ist.

13. Separator nach einem der Ansprüche 1-7, **dadurch gekennzeichnet, dass** die Spindel (10) mit einer zentrischen Bohrung (22) versehen ist und mit ihrem von der Schleudertrommel (8) abgewandten Ende in den Ölsumpf (24) eintaucht, wobei sich die zentrische Bohrung (22) axial durch die Spindel (10) bis mindestens einem radialen Verteilerkanal (28, 30) erstreckt, der oberhalb der Tauchscheibe (20) in die Sperrkammer (18) mündet.

14. Separator nach Anspruch 13, **dadurch gekennzeichnet, dass** die zentrische Bohrung (22) zum Ölsumpf (24) hin sich verjüngend ausgebildet ist.

15. Separator nach einem der vorstehenden Ansprüche 1-7, **gekennzeichnet durch** eine Bohrung (35) in der Außenwandung (18a) der Sperrkammer (18) zur Ölzuleitung in die Sperrkammer (18).

16. Separator nach Anspruch 15, **dadurch gekennzeichnet, dass** die Bohrung (35) zur Ölversorgung dem Ölsumpf (24) verbunden ist oder mit einem externen Ölaggregate verbindbar ist.

17. Separator nach einem der vorstehenden Ansprüche, **dadurch gekennzeichnet, dass** die Lager (12, 14) als Wälzlager ausgebildet sind.

## Claims

1. Separator, which
a) has a centrifugal drum (2) which is arranged in a container (4) and the axis of rotation of which is oriented vertically and
b) which can be driven by means of a central spindle (10) which is mounted rotatably about the vertical on a machine stand (6) by means of an upper bearing (12) and a lower bearing (14) offset axially with respect to the latter,
**characterized in that**
c) a barrier chamber (18) for hydrohermetic sealing by means of an oil layer is formed at least in portions around the spindle (10) in the axial region between the upper bearing (12) and the centrifugal drum (8),
d) a submersible disc (20) is arranged in the barrier chamber (18),
e) the barrier chamber (20) has a connection to a passage (32), in which the two bearings (12, 14) are arranged so as to be offset axially with respect to one another in such a way that the oil is transferred out of the barrier chamber (18) for lubrication to the bearings (12, 14).

2. Separator according to Claim 1, **characterized in that** the centrifugal drum (8) is placed from above onto the spindle (10).

3. Separator according to either one of Claims 1 and 2, **characterized in that** the barrier chamber (18) is connected to an oil sump (24).

4. Separator according to one of the preceding claims, **characterized in that** the barrier chamber (18) surrounds the spindle (10) annularly and has an outer wall (18a) and an upper and a lower axial wall (18b, c).

5. Separator according to one of the preceding claims, **characterized in that** the submersible disc (20) is designed as an element co-rotating with the spindle (10) during operation.

6. Separator according to one of the preceding claims, **characterized in that** the outer wall (18a) and the two axial walls (18b, c) of the barrier chamber (18) are designed to be stationary during operation.

7. Separator according to Claims 5 and 6, **characterized in that** the submersible disc (20) has ribs (34) on its axial walls.

8. Separator according to one of Claims 1-4, **characterized in that** the submersible disc (20) is designed as an element which is stationary during operation.

9. Separator according to Claim 8, **characterized in that** the outer wall (18a) and the two axial walls (18b, c) of the barrier chamber (18) are designed to co-rotate with the spindle (10) during operation.

10. Separator according to Claim 9, **characterized in that** the axial walls (18b, c) of the barrier chamber (18) are provided with ribs (38).

11. Separator according to Claim 9 or 10, **characterized in that** the submersible disc (20) is integrally formed onto a cylindrical machine stand part (40) which surrounds the spindle (10) and is stationary during operation, and **in that** the barrier chamber (18) is connected in the region of its lower axial wall (18c) to the spindle (10).

12. Separator according to Claim 11, **characterized in that** the barrier chamber is surrounded on the outer circumference by an annular space (44) which is connected to the annular duct (32).

13. Separator according to one of Claims 1-7, **characterized in that** the spindle (10) is provided with a central bore (22) and dips with its end facing away from the centrifugal drum (8) into the oil sump (24), the central bore (22) extending axially through the spindle (10) as far as at least one radial distributor duct (28, 30) which issues into the barrier chamber (18) above the submersible disc (20).

14. Separator according to Claim 13, **characterized in that** the central bore (22) is designed to taper towards the oil sump (24).

15. Separator according to one of the preceding Claims 1-7, **characterized by** a bore (35) in the outer wall (18a) of the barrier chamber (18) for delivering oil into the barrier chamber (18).

16. Separator according to Claim 15, **characterized in that**, for the supply of oil, the bore (35) is connected or is connectable by means of an external oil assembly to the oil sump (24).

17. Separator according to one of the preceding claims, **characterized in that** the bearings (12, 14) are designed as rolling bearings.

## Revendications

1. Séparateur,
a) comportant un panier centrifuge (2), qui est monté dans un récipient (4) et dont l'axe de rotation est orienté verticalement, et
b) qui peut être actionné par une broche (10) centrale, qui est montée de manière à tourner autour de l'axe vertical sur un bâti de machine (6) avec un palier supérieur (12) et un palier inférieur (14), écartés l'un de l'autre dans le sens axial,
**caractérisé en ce que**
c) dans la zone axiale entre le palier supérieur (12) et le panier centrifuge (8) est réalisée au moins par zones autour de la broche (10) une chambre de retenue (18) pour réaliser une étanchéité hydro-hermétique au moyen d'une couche d'huile,
d) un disque d'immersion (20) est monté dans la chambre de retenue (18),
e) la chambre de retenue (20) comporte une liaison avec un passage (32), dans lequel les deux paliers (12, 14), écartés l'un de l'autre dans le sens axial, sont montés de telle sorte que l'huile est acheminée hors de la chambre de retenue (18) vers les paliers (12, 14), en vue d'une lubrification.

2. Séparateur selon la revendication 1, **caractérisé en ce que** le panier centrifuge (8) est posé depuis le haut sur la broche (10).

3. Séparateur selon la revendication 1 ou 2, **caractérisé en ce que** la chambre de retenue (18) est reliée à une cuve d'huile inférieure (24).

4. Séparateur selon l'une quelconque des revendications précédentes, **caractérisé en ce que** la chambre de retenue (18) entoure de manière annulaire la broche (10) et comporte une paroi extérieure (18a) et une paroi axiale supérieure (18b) et une paroi axiale inférieure (18c).

5. Séparateur selon l'une quelconque des revendications précédentes, **caractérisé en ce que** le disque d'immersion (20) est réalisé sous forme d'élément entraîné en rotation avec la broche (10) en cours de service.

6. Séparateur selon l'une quelconque des revendications précédentes, **caractérisé en ce que** la paroi extérieure (18a) et les deux parois axiales (18b, c) de la chambre de retenue (18) sont immobiles en cours de service.

7. Séparateur selon les revendications 5 et 6, **caractérisé en ce que** le disque d'immersion (20) comporte des nervures (34) sur ses parois axiales.

8. Séparateur selon l'une quelconque des revendications 1 à 4, **caractérisé en ce que** le disque d'immersion (20) est réalisé sous forme d'élément immobile en cours de service.

9. Séparateur selon la revendication 8, **caractérisé en ce que** la paroi extérieure (18a) et les deux parois axiales (18b, c) de la chambre de retenue (18) sont entraînées en rotation avec la broche (10) en cours de service.

10. Séparateur selon la revendication 9, **caractérisé en ce que** les parois axiales (18b, c) de la chambre de retenue (18) sont munies de nervures (38).

11. Séparateur selon la revendication 9 ou 10, **caractérisé en ce que** le disque d'immersion (20) est formé contre un élément (40) cylindrique du bâti de machine, immobile en cours de service et entourant la broche (10), et **en ce que** la chambre de retenue (18) est reliée à la broche (10) dans la zone de sa paroi axiale inférieure (18c).

12. Séparateur selon la revendication 11, **caractérisé en ce que** la chambre de retenue est entourée sur son pourtour extérieur par un espace annulaire (44) qui communique avec le canal annulaire (32).

13. Séparateur selon l'une quelconque des revendications 1 à 7, **caractérisé en ce que** la broche (10) comporte une forure centrale (22) et plonge avec ses extrémités opposées au panier centrifuge (8) dans la cuve d'huile inférieure (24), la forure centrale (22) s'étendant dans le sens axial à travers la broche (10) jusqu'à au moins un canal de distribution (28, 30) radial, qui débouche au-dessus du disque d'immersion (20) dans la chambre de retenue (18).

14. Séparateur selon la revendication 13, **caractérisé en ce que** la forure centrale (22) est réalisée en se rétrécissant vers la cuve d'huile inférieure (24).

15. Séparateur selon l'une quelconque des revendications 1 à 7, **caractérisé par** une forure (35) dans la paroi extérieure (18a) de la chambre de retenue (18) pour le guidage de l'huile dans la chambre de retenue (18).

16. Séparateur selon la revendication 15, **caractérisé en ce que** la forure (35), pour acheminer l'huile dans la cuve d'huile inférieure (24), est reliée ou peut être reliée à un organe d'huile externe.

17. Séparateur selon l'une quelconque des revendications précédentes, **caractérisé en ce que** les paliers (12, 14) sont réalisés sous forme de paliers de roulement.
